# DEMANDE DE BREVET EUROPEEN

(11) **EP 2 799 695 A1**
(43) Date de publication de la demande: **05.11.2014**
(21) Numéro de dépôt: 14160744.0
(22) Date de dépôt: 19.03.2014
(51) Int. Cl.: F02D 41/00, F02M 25/07

(54) **Moteur de vehicule automobile a recirculation de gaz d'echappement a pollution reduite**

(30) Priorité: 30.04.2013 FR 1353932
(71) Demandeur: PEUGEOT CITROËN AUTOMOBILES SA, 78140 Velizy-Villacoublay (FR)
(72) Inventeur: Denys, Fabien, 59300 Valenciennes (FR); Fontaine, David, 94200 Ivry sur Seine (FR)

(57) **Abrégé**

L'invention concerne un moteur à combustion de véhicule automobile à réintroduction de gaz d'échappement, un module de pilotage étant configuré pour commander, dans le cas d'une baisse d'une demande de couple produit par le moteur, une réduction de couple produit par le cylindre (14) dont au moins une partie des gaz d'échappement sont réintroduits dans l'organe d'admission (20) plus rapide qu'une réduction de couple produit par un autre cylindre (11,12,13) du moteur.

## Description

L'invention concerne les moteurs à combustion de véhicules automobiles dotés d'un système de recirculation des gaz d'échappement issus des cylindres vers l'admission d'air des cylindres.

De tels systèmes sont bien connus sous le sigle EGR correspondant à la locution anglo-américaine Exhaust Gaz Recirculation. On a notamment proposé, dans les moteurs à plusieurs cylindres, de dédier un cylindre à la recirculation des gaz d'échappement, les gaz d'échappement de ce cylindre étant totalement réintroduits dans le collecteur d'admission du moteur. Dans de tels moteurs, les gaz d'échappement réintroduits à l'admission sont typiquement chargés en gaz dihydrogène du fait d'un fonctionnement dans lequel le ou les cylindres dont on réintroduit les gaz d'échappement fonctionnent avec un mélange air-carburant de type riche. De tels moteurs sont connus sous l'appellation D-EGR pour Dedicated Exhaust Gaz Recirculation en anglais ou à système dédié de réintroduction ou recirculation de gaz d'échappement en français.

Le concept D-EGR permet de générer des gaz EGR dopés en hydrogène en faisant fonctionner un cylindre en mode riche, avantageusement une richesse de l'ordre de 1,5. Cet hydrogène permet d'améliorer la stabilité de la combustion et donc la tolérance à l'EGR. Le moteur D-EGR permet de réduire les pertes par pompage à l'admission du moteur pour les points de charge partielle, et de repousser la limite à partir de laquelle apparait un cliquetis pour les points de pleine charge. Il est avantageux d'avoir une machine de suralimentation suffisamment performante pour rétablir le débit d'air nécessaire et ainsi conserver voire augmenter les performances du moteur.

Un inconvénient assez important des systèmes EGR est une conséquence du fait qu'il renvoient les gaz d'échappement vers l'admission, et plus particulièrement pour les systèmes DEGR qui renvoient tous les gaz d'échappement du ou des cylindres dédiés vers l'admission. En effet les gaz d'échappement sont chargés en différents composés et en particulier le cylindre DEGR ayant un fonctionnement en mélange riche, il y a un excès de carburant en permanence. Lors d'un lâcher de pied, c'est-à-dire pour une consigne de couple nulle, il est nécessaire de bruler les différents composés et notamment tout le carburant en excès qui repasse par l'admission et par les cylindres moteurs, afin que ces composés et ce carburant ne se retrouvent pas dans l'air ambiant.

Le but de l'invention est de pallier cet inconvénient en proposant un moteur qui ne rejette pas dans l'atmosphère différents composés présents à l'admission dont des hydrocarbures dans le cas d'une baisse brutale d'un besoin de couple produit par le moteur.

Ce but est atteint selon l'invention grâce à un moteur à combustion de véhicule automobile à réintroduction de gaz d'échappement comprenant plusieurs cylindres de combustion, un organe d'admission d'air frais en direction d'un ou plusieurs cylindres et une ligne de réintroduction de gaz d'échappement depuis au moins un cylindre de combustion dans l'organe d'admission, le moteur comportant en outre un module de pilotage de plusieurs cylindres de combustion du moteur, caractérisé en ce que le module de pilotage est configuré pour commander, dans le cas d'une baisse d'une demande de couple produit par le moteur, une réduction de couple produit par ledit au moins un cylindre dont au moins une partie des gaz d'échappement sont réintroduits dans l'organe d'admission et une réduction de couple produit par un autre cylindre du moteur, la réduction de couple produit par le cylindre dont au moins une partie des gaz d'échappement sont réintroduits dans l'organe d'admission étant plus rapide que la réduction de couple produit par ledit autre cylindre du moteur.

Avantageusement, le module de pilotage est configuré pour mettre en oeuvre une première consigne de couple pour ledit au moins un cylindre dont au moins une partie des gaz d'échappement sont réintroduits dans l'organe d'admission et une deuxième consigne de couple pour ledit au moins un autre cylindre, la première consigne de couple étant inférieure à la deuxième consigne de couple dans le cas de ladite baisse de la demande de couple produit par le moteur.

Avantageusement, la première consigne de couple est nulle tandis que la deuxième consigne de couple est non nulle.

Avantageusement, le module de pilotage est configuré pour mettre en oeuvre une deuxième consigne de couple qui évolue de manière progressivement décroissante dans le cas de ladite baisse de demande de couple produit par le moteur.

Avantageusement, le module de pilotage est configuré pour mettre en oeuvre une deuxième consigne de couple qui évolue de manière linéairement décroissante dans le cas de ladite baisse de demande de couple produit par le moteur.

Avantageusement, le moteur comporte un équipement de détection ou d'estimation de présence de carburant en entrée d'au moins un cylindre du moteur, et le module de pilotage est configuré pour commander un couple produit par ledit au moins un autre cylindre du moteur qui est non nul tant que l'équipement de détection ou d'estimation de présence de carburant détecte ou estime une présence de carburant.

Avantageusement, le module de pilotage est configuré pour détecter une disparition de de demande de couple produit par le moteur et mettre en oeuvre une réduction de couple produit par ledit au moins un cylindre dont au moins une partie des gaz d'échappement sont réintroduits dans l'organe d'admission qui est plus rapide qu'une réduction de couple produit par au moins un autre cylindre du moteur en réponse à une telle disparition de demande de couple produit par le moteur.

Avantageusement, le moteur comporte au moins un cylindre dont les gaz d'échappement sont entièrement réintroduits dans l'organe d'admission et il comporte au moins un cylindre dont au moins une partie des gaz d'échappement sont rejetés dans l'air ambiant sans être réintroduits dans un cylindre de combustion.

Avantageusement, le moteur comporte un seul cylindre dont les gaz d'échappement sont entièrement réintroduits dans l'organe d'admission et il comporte au moins un cylindre dont au moins une partie des gaz d'échappement est rejetée dans l'air ambiant sans être réintroduite dans un cylindre de combustion.

Avantageusement, ledit au moins un cylindre dont au moins une partie des gaz d'échappement sont réintroduits dans l'organe d'admission est un cylindre à fonctionnement à richesse supérieure à 1 de sorte qu'il produit des gaz d'échappement chargés en hydrogène.

D'autres caractéristiques, buts et avantages de l'invention apparaitront à la lecture de la description qui va suivre, faite en référence aux figures annexées sur lesquelles :

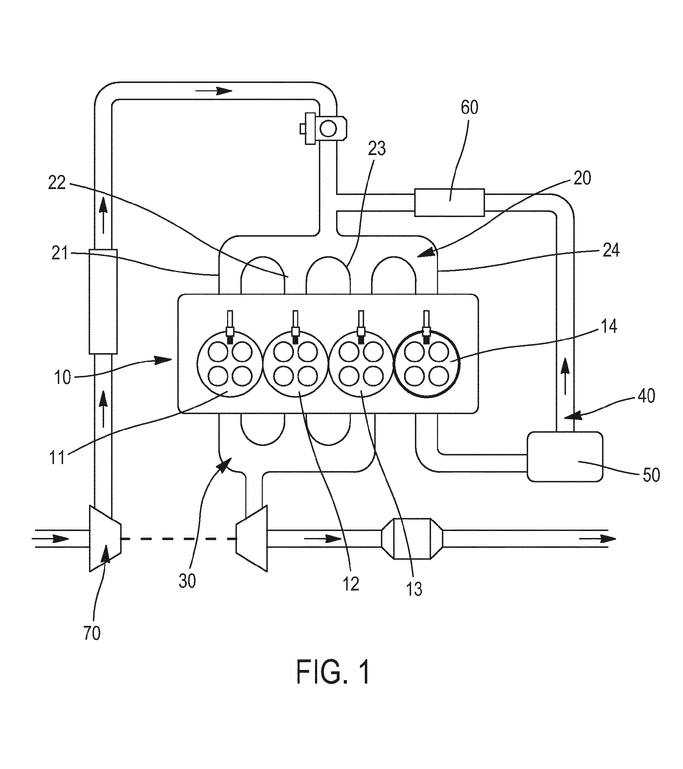

- la figure 1 représente un moteur D-EGR selon un mode de réalisation de l'invention,

- la figure 2 est un diagramme illustrant le fonctionnement de différents cylindres de ce moteur dans une situation de lâcher de pied du conducteur.

Le moteur représenté sur la figure annexée comporte un bloc-moteur 10 muni de quatre cylindres 11, 12, 13, 14. Le moteur comporte en outre un collecteur d'admission 20 débouchant dans chacun des cylindres 11, 12, 13 14 par une conduite d'admission respective 21, 22, 23, 24. Un collecteur d'échappement 30 collecte en outre les gaz d'échappement émanant de chacun des cylindres 11, 12 et 13.

Le cylindre 14 est lui associé à un circuit 40 de réintroduction de gaz d'échappement à l'admission. Ainsi le circuit 40 prélève les gaz d'échappement du cylindre 14 et les dirige vers l'admission du moteur. Plus spécifiquement, les gaz d'échappement du cylindre 14 sont véhiculés par le circuit 40 vers le collecteur d'admission 20 en passant à travers un catalyseur D-EGR 50 et un refroidisseur D-EGR 60.

Le présent moteur comporte en outre un turbocompresseur 70 entrainé par les gaz d'échappement émanant des cylindres 11, 12 et 13 et mettant en pression un flux d'air frais lequel arrive à l'admission du moteur une fois compressé.

Le cylindre 14 est ici un cylindre de type D-EGR. Un module de contrôle du moteur pilote une alimentation en air et en carburant du cylindre 14 de telle sorte que le cylindre 14 est le siège d'une combustion à mélange riche, c'est-à-dire en excès de carburant par rapport à l'air, ici selon une richesse d'environ 1,5. De par la richesse du mélange air-carburant, le cylindre 14 produit du gaz dihydrogène H2. Le gaz H2 ainsi produit se retrouve dans les gaz d'échappement émis par le cylindre 14 lesquels sont ensuite, selon le principe du moteur D-EGR, réintroduits à l'admission d'au moins un cylindre du moteur, ici à l'admission de l'ensemble des cylindres 11 à 14. Le moteur selon le présent exemple de réalisation ne comporte qu'un seul cylindre produisant de l'hydrogène selon le principe D-EGR. En variante le moteur peut en comporter plusieurs.

Le présent moteur renvoie des gaz d'échappement à l'admission, mais également des hydrocarbures car le cylindre 14 dédié à l'EGR fonctionne en mélange riche. Afin d'éviter un rejet de substances polluantes contenues dans ces gaz d'échappement et notamment un rejet d'hydrocarbures, on souhaite ici brûler ces substances et ces hydrocarbures et ainsi éviter qu'ils ne partent directement à l'échappement sans être brûlés.

Le module de pilotage du moteur met ici en oeuvre un pilotage des différents cylindres de manière à atteindre une consigne de couple produit par le moteur telle que demandée par le conducteur par l'intermédiaire d'une pédale d'accélérateur. Le présent module de pilotage est configuré de manière à mettre en oeuvre une consigne de couple particulière et spécifique pour le cylindre 14, tandis qu'il met en oeuvre une consigne de couple également particulière pour les cylindres 11 à 13. Dans le présent mode de réalisation, chacun des cylindres 11 à 13 produit sous la commande du module de pilotage cette même valeur de couple particulière aux cylindres 11 à 13, mais en variante les module de pilotage met en oeuvre des consignes de couple qui sont différentes selon les cylindres 11 à 13.

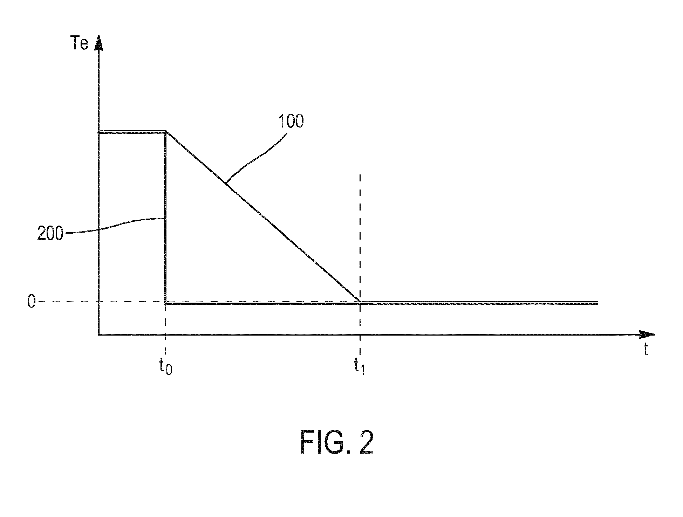

La figure 2 est un tracé qui représente en ordonnée une consigne de couple Te et en abscisse le temps t. Sur la figure 2, on a représenté sous la référence 100 l'évolution dans le temps d'une consigne de couple demandée à chacun des cylindres 11 à 13 et sous la référence 200 l'évolution d'une consigne de couple demandée au cylindre dédié 14.

Sur la figure 2, un lâcher de pied intervient à un instant t0, donnant naissance à une consigne de couple sensiblement nulle pour le moteur. A cet instant, la consigne de couple 200 appliquée au cylindre dédié 14 devient brutalement nulle. Simultanément, la consigne de richesse pour le cylindre 14 devient nulle également. La consigne de couple 100 appliquée aux cylindres non dédiés 11 à 13 adopte quant à elle une décroissance linéaire jusqu'à atteindre une valeur nulle à un instant t1. Une consigne de richesse à 1 est ici conservée pour les cylindres 11 à 13 tant que la consigne de couple de ces cylindres n'a pas atteint la valeur nulle.

Le moteur est ici équipé d'un module, qui peut être le module de pilotage du moteur, qui réalise une estimation de la présence d'hydrocarbures ou du taux de gaz d'échappement réintroduits à l'admission. Le résultat de cette estimation permet au module de pilotage du moteur de vérifier que l'admission a bien vidangé tous les hydrocarbures avant que la consigne de couple 100 des cylindres non dédiés 11 à 13 ne devienne nulle.

En variante, la fonction de décroissance de la consigne de couple 100 des cylindres non dédiés 11 à 13 est définie automatiquement par le module de pilotage en fonction de la présence d'hydrocarbures estimés à l'admission. Ainsi, le module de pilotage définit une pente de décroissance plus ou moins élevée de la consigne de couple 100 en fonction d'une concentration en hydrocarbures à l'admission. On s'assure ainsi que la consigne de couple à zéro des cylindres 11, 12,13 non dédiés à l'EGR est plus tardive que l'estimation à zéro de la présence d'hydrocarbures à l'admission.

On met donc en oeuvre dans le présent mode de réalisation une stratégie de décroissance des couples moteur de consigne des différents cylindres pour le lâcher de pied du moteur afin de répondre à une problématique de vidange en gaz brûlés et en carburant de l'admission moteur, en utilisant une consigne de couple différenciée entre le cylindre dédié DEGR et les autres cylindres non dédiés. Une telle fonction de décroissance du couple de consigne permet également de répondre aux problématiques d'agrément de véhicule vis-à-vis des normes anti-pollution.

La fonction de pilotage décrite ici peut être mise en oeuvre par exemple de manière discrétisée dans le temps ou encore aux points mort haut du cycle des cylindres.

Ainsi, on met en oeuvre dans le présent exemple une fonction de pilotage comportant en entrée une variable d'estimation des hydrocarbures à l'admission. En sortie de cette fonction, on obtient une consigne de couple moteur 200 pour le cylindre 14 dédié à l'EGR et une consigne de couple 100 pour les cylindres 11, 12, 13 non dédiés à l'EGR.

Diverses variantes du présent exemple de réalisation sont possibles. Ainsi, bien que la consigne de richesse du cylindre dédié 14 soit, dans le présent exemple, fixée à zéro lors du lâcher de pied, une consigne de richesse ayant une évolution différente peut être adoptée. En variante encore, on met en oeuvre une coupure brutale du fonctionnement actif des cylindres en cas de lâcher de pied en coupant sélectivement les cylindres de telle manière que les cylindres non dédiés soient coupés avant le cylindre dédié.

## Revendications

1. Moteur à combustion de véhicule automobile à réintroduction de gaz d'échappement comprenant plusieurs cylindres de combustion (11,12,13,14), un organe d'admission d'air frais (20) en direction d'un ou plusieurs cylindres (11,12,13,14) et une ligne de réintroduction de gaz d'échappement (40) depuis au moins un cylindre de combustion (14) dans l'organe d'admission (20), le moteur comportant en outre un module de pilotage de plusieurs cylindres de combustion du moteur (11,12,13,14), **caractérisé en ce que** le module de pilotage est configuré pour commander, dans le cas d'une baisse d'une demande de couple produit par le moteur, une réduction de couple (200) produit par ledit au moins un cylindre (14) dont au moins une partie des gaz d'échappement sont réintroduits dans l'organe d'admission (20) et une réduction de couple (100) produit par un autre cylindre (11,12,13) du moteur, la réduction de couple (200) produit par le cylindre (14) dont au moins une partie des gaz d'échappement sont réintroduits dans l'organe d'admission (20) étant plus rapide que la réduction de couple (100) produit par ledit autre cylindre (11,12,13) du moteur.

2. Moteur à combustion selon la revendication 1, **caractérisé en ce que** le module de pilotage est configuré pour mettre en oeuvre une première consigne de couple (200) pour ledit au moins un cylindre (14) dont au moins une partie des gaz d'échappement sont réintroduits dans l'organe d'admission (20) et une deuxième consigne de couple (100) pour ledit au moins un autre cylindre (11,12,13), la première consigne de couple (200) étant inférieure à la deuxième consigne de couple (100) dans le cas de ladite baisse de la demande de couple produit par le moteur.

3. Moteur à combustion selon la revendication précédente, **caractérisé en ce que** la première consigne de couple (200) est nulle tandis que la deuxième consigne de couple (100) est non nulle.

4. Moteur à combustion selon la revendication 2 ou la revendication 3, **caractérisé en ce que** le module de pilotage est configuré pour mettre en oeuvre une deuxième consigne de couple (100) qui évolue de manière progressivement décroissante dans le cas de ladite baisse de demande de couple produit par le moteur.

5. Moteur à combustion selon la revendication 4, **caractérisé en ce que** le module de pilotage est configuré pour mettre en oeuvre une deuxième consigne de couple (100) qui évolue de manière linéairement décroissante dans le cas de ladite baisse de demande de couple produit par le moteur.

6. Moteur à combustion selon l'une quelconque des revendications précédentes, **caractérisé en ce qu'**il comporte un équipement de détection ou d'estimation de présence de carburant en entrée d'au moins un cylindre du moteur (11,12,13,14), et le module de pilotage est configuré pour commander un couple (100) produit par ledit au moins un autre cylindre (11,12,13) du moteur qui est non nul tant que l'équipement de détection ou d'estimation de présence de carburant détecte ou estime une présence de carburant.

7. Moteur à combustion selon l'une quelconque des revendications précédentes, **caractérisé en ce que** le module de pilotage est configuré pour détecter une disparition de demande de couple produit par le moteur et mettre en oeuvre une réduction de couple (200) produit par ledit au moins un cylindre (14) dont au moins une partie des gaz d'échappement sont réintroduits dans l'organe d'admission (20) qui est plus rapide qu'une réduction de couple (100) produit par au moins un autre cylindre (11,12,13) du moteur en réponse à une telle disparition de demande de couple produit par le moteur.

8. Moteur à combustion selon l'une quelconque des revendications précédentes, **caractérisé en ce que** le moteur comporte au moins un cylindre (14) dont les gaz d'échappement sont entièrement réintroduits dans l'organe d'admission (20) et il comporte au moins un cylindre (11,12,13) dont au moins une partie des gaz d'échappement sont rejetés dans l'air ambiant sans être réintroduits dans un cylindre de combustion.

9. Moteur à combustion selon l'une quelconque des revendications précédentes, **caractérisé en ce que** le moteur comporte un seul cylindre (14) dont les gaz d'échappement sont entièrement réintroduits dans l'organe d'admission (20) et il comporte au moins un cylindre (11,12,13) dont au moins une partie des gaz d'échappement est rejetée dans l'air ambiant sans être réintroduite dans un cylindre de combustion.

10. Moteur à combustion selon l'une quelconque des revendications précédentes, **caractérisé en ce que** ledit au moins un cylindre (14) dont au moins une partie des gaz d'échappement sont réintroduits dans l'organe d'admission (20) est un cylindre à fonctionnement à richesse supérieure à 1 de sorte qu'il produit des gaz d'échappement chargés en hydrogène.
